# EUROPEAN PATENT SPECIFICATION

(11) **EP 2 986 249 B1**
(45) Date of publication and mention of the grant of the patent: **16.11.2016**
(21) Application number: 14708311.7
(22) Date of filing: 07.03.2014
(51) Int. Cl.: A61C 19/04, A61C 19/06

(54) **ORAL CARE SYSTEM**
MUNDPFLEGESYSTEM
SYSTÈME DE SOINS BUCCO-DENTAIRES

(30) Priority: 19.04.2013 EP 13164543; 09.01.2014 EP 14150610
(43) Date of publication of application: 24.02.2016
(73) Proprietor: Unilever PLC, London, Greater London EC4Y 0DY (GB); Unilever N.V., 3013 AL Rotterdam (NL)
(72) Inventor: EVANS, Rebecca Mary, Wirral Merseyside CH63 3JW (GB); JOINER, Andrew, Wirral Merseyside CH63 3JW (GB); LUO, Wen, Wirral Merseyside CH63 3JW (GB); POMATI, Giuseppe, 26841 Casalpusterlengo (Lodi) (IT)
(74) Representative: Tansley, Sally Elizabeth
(86) International application number: PCT/EP2014/054505
(87) International publication number: WO 2014/170065

(56) References cited:
- US-A- 5 692 900
- US-A1- 2003 224 318
- US-A1- 2008 153 054

## Description

### Field of the Invention

The present invention concerns an oral care composition for improving tooth surface properties (such as by remineralisation of the teeth) and an assessment device packaged with the oral care composition to demonstrate its efficacy.

### Background and Prior Art

The surface enamel of the teeth is what makes teeth look smooth, glossy and lustrous. Tooth erosion is the loss of tooth surface enamel, and can be caused by acids introduced into the oral cavity from the environment, diet, medications and general lifestyle choices. These acids break down the tooth surface structure, resulting in the creation of tiny defects such as dimples, cracks, pits or crevices. These surface defects provide sites for accumulation of unsightly plaque and stains. They may also alter the dispersion of light in such as way that the tooth can appear duller and darker than it otherwise would. If allowed to progress, what begins as a cosmetic problem can lead to functional problems such as tooth sensitivity and increased susceptibility to cavities.

Due to today's lifestyles with increasing consumption of acidic drinks and foods, tooth erosion is becoming more prevalent. Accordingly much effort has been devoted to providing oral care products which reduce or counter the erosion of peoples' tooth enamel in order to maintain good oral health and tooth appearance.

Recent innovations have resulted in products containing calcium and phosphate technology as well as fluoride. These offer cosmetic benefits and increase the availability of calcium, phosphate and fluoride for the strengthening of enamel.

Typically, the active ingredients is such products impart an effect which emerges gradually over a period of time. For optimum effects it is usually important to adhere to a regular daily treatment regime (e.g. brushing or rinsing with product at least twice a day). This may be a problem where the consumer cannot easily discern whether the claimed benefit is actually delivered.

Accordingly, it is an advantage of the present invention to provide an oral care system in which progress in imparting improved surface properties to teeth with an oral care composition (such as a tooth remineralising composition) is measured by a low cost, simple test for a consumer to self evaluate efficacy of the composition.

Another advantage of the present invention is to provide a oral care system which employs a low cost, simple self evaluation tool for measuring changes in tooth surface smoothness and texture.

Examples of other systems used for evaluating tooth visual properties are provided by US 2008/0153054 and US2003/0224318.

### Summary of the Invention

The present invention provides an oral care system which includes:
(i) an oral care composition effective to impart
   improved surface properties to teeth; and
(ii) an assessment device packaged with the
   composition, the device including a graduated scale
   corresponding to a spectrum of surface roughness, in which
   regions of the scale may be compared with the tooth surface
   of the user to demonstrate a progressive improvement in
   tooth surface properties imparted by the composition.

Also described herein is a method for demonstrating efficacy of an oral care composition directed at improving tooth surface properties, which method includes the steps of:
(i) providing an oral care composition effective to
   impart improved surface properties to teeth when applied
   over a period of time;
(ii) providing an assessment device packaged with the
   composition, the device including a graduated scale
   corresponding to a spectrum of surface roughness;
(iii) placing the assessment device against the tooth
   surface of the user and assessming tooth surface roughness by
   tactually comparing the tooth surface against regions of the
   graduated scale and establishing (from that comparison)
   which of the regions has the most similar roughness to the
   tooth surface;
(iv) treating the teeth with the oral care composition,
   and
(v) reassessing tooth surface roughness by repeating
   step (iii) at least one, thereby demonstrating a progressive improvement in tooth surface properties imparted by the oral care composition.

### Detailed Description and Preferred Embodiments

An assessment device for use in the invention includes a graduated scale corresponding to a spectrum of surface roughness, in which regions of the scale may be compared with the tooth surface of the user to demonstrate a progressive improvement in tooth surface properties imparted by the composition.

A typical assessment device for the purposes of the present invention comprises a generally flat planar substrate having a smooth upper surface. In the context of the present invention, a "smooth surface" is a surface that does not have bumps or other aberrations that are capable of being sensed by a normal human tactile sensation.

The substrate will usually be formed from cellulosic (e.g. paper or cardboard) or synthetic polymeric material or a mixture thereof. Preferably the substrate is formed from a water-resistant material, or its surface is laminated with a water-resistant material, for improved handling and durability since it is likely to be used in bathrooms.

Preferably, the graduated scale on the assessment device takes the form of an array of discrete patches provided on the upper surface of the substrate, each patch having a particular surface roughness which changes progressively as the array is traversed.

In a preferred assessment device, the generally planar substrate takes the form of an elongated strip, with the patches arranged in a linear manner along the length of the strip. Such a strip will generally be dimensioned to facilitate manual handling, with a length ranging from 10 to 25 cm, preferably from 15 to 20 cm, a width ranging from 2 to 10 cm, preferably from 4 to 8 cm, and a thickness ranging from 0.0001 to 1 mm, preferably from 0.01 to 0.1 mm.

The number of patches suitably ranges from 2 to 10 and is preferably from 4 to 8.

Surface roughness is a measurement of the small-scale variations in the height of a physical surface. In the context of the present invention, surface roughness is provided by the presence of vertical surface irregularities.

In a typical assessment device for use in the invention, the individual patches are each overlaid with a uniformly textured surface. Typically this is formed by an applied layer of paint, ink or other pigment incorporating particulate solids. By varying the particle size distribution of the particulate solids, different surface roughness levels may be imparted to the individual patches. Alternatively, the patches may be printed or embossed with surface irregularities such as bumps, dots or dimples. By varying the density or topology of the surface irregularities, different surface roughness levels may be imparted to the individual patches.

The patches may also be provided with or associated with additional indicia to enable visual differentiation. Examples include additional graphics, wording and/or colours. In a preferred embodiment, patch colour lightens from dark cream to perfect white in the direction of decreasing patch surface roughness.

Preferably the patches are rounded in shape, or shaped like the outline of a tooth. Typically their individual surface area ranges from 1 to 10 cm², preferably from 2 to 6 cm². Such dimensions enable convenient tactual comparison using the plantar pad of the fingers.

In a typical usage of the assessment device as described above, the user rubs the plantar pad of a finger over the regions of the graduated scale, and either sequentially or simultaneously rubs the plantar pad of a finger or the surface of the tongue over the tooth surface to be assessed. From that comparison, the user establishes which of the regions has the most similar roughness to the tooth surface.

The assessment device thus provides a simple, convenient and effective way for the user to self assess tooth surface roughness.

By reassessing tooth surface roughness by the above method at least once, and preferably at periodic intervals (for example weekly or monthly), the user may observe the progressive improvement in tooth surface properties imparted by the oral care composition.

In the oral care system according to the present invention, the assessment device as described above is packaged with an oral care composition. A variety of packaging arrangements are envisioned. The assessment device may be placed into a carton alongside a container holding the oral care composition. Alternatively the assessment device may be incorporated as a panel segment of a carton, the latter protectively surrounding the oral care composition. In a variation thereof, the assessment device may be detachably joined to the package through a perforated or weakened construction line, or through an adhesive joinder.

The oral care product system according to the present invention includes an oral care composition effective to impart improved surface properties to teeth (such as a tooth remineralising composition).

Examples of suitable oral care compositions for use in the invention include dentifrices, mouthwashes, chewing gums, lozenges, bioadhesive patches or strips, mouth sprays and liquid formulations, such as paints or lacquers, which are designed to be applied directly to the tooth surface using an applicator such as a brush or sponge tip applicator.

Preferred oral care compositions for use in the invention include those which are suitable for brushing and/or rinsing the surfaces of the oral cavity.

Most preferred oral care compositions for use in the invention are in the form of a dentifrice. The term "dentifrice" denotes a formulation which is used to clean the surfaces of the oral cavity. The dentifrice is an oral composition that is not intentionally swallowed for purposes of systemic administration of therapeutic agents, but is retained in the oral cavity for a sufficient time to contact substantially all of the dental surfaces and/or mucosal tissues for purposes of oral activity. Preferably the dentifrice is suitable for application with a toothbrush and is rinsed off after use. Preferably the dentifrice is in the form of an extrudable semi-solid such as a cream, paste or gel (or mixture thereof).

A dentifrice composition for use in the oral care system of the invention will most preferably be a non-aqueous composition with a liquid continuous phase comprising a thickening agent, a humectant, and one or more agents for the remineralisation of teeth.

The term "non-aqueous" generally means that water is present in an amount no greater than about 5%, more preferably no greater than about 3% by weight based on the total weight of the composition.

Suitable thickening agents include organic macromolecules which do not necessarily require hydration with water in order to build viscosity, but can also build viscosity by alternative mechanisms such as by hydrogen bonding in the presence of hydroxyl donors such as polyols. Carboxyvinyl polymers have been found to be useful in this context. Specific examples of such materials are homopolymers of acrylic acid cross-linked with allyl ethers of sucrose or pentaerythritol and homopolymers of acrylic acid cross-linked with divinyl glycol. The amount of carboxvinyl polymer suitably ranges from 0.05 to 5%, preferably from 0.1 to 2%, more preferably from 0.2 to 0.5% by total weight carboxyvinyl polymer based on the total weight of the composition.

Preferred humectants for use in the invention include organic polyols having 3 or more hydroxyl groups in the molecule (hereinafter termed "organic polyols"). Examples of such materials include glycerol, sorbitol, xylitol, mannitol, lactitol, maltitol, erythritol, and hydrogenated partially hydrolyzed polysaccharides. The most preferred organic polyol is glycerol. Mixtures of any of the above described materials may also be used.

The amount of organic polyol suitably ranges from 35 to 75%, more preferably from 45 to 70% by total weight organic polyol based on the total weight of the composition.

The dentifrice will also usually comprise abrasive materials in an amount of from 3 to 75% by weight based on the total weight of the dentifrice. Suitable abrasive materials include abrasive silicas, calcium carbonate, dicalcium phosphate, tricalcium phosphate, calcined alumina, sodium and potassium metaphosphate, sodium and potassium pyrophosphates, sodium trimetaphosphate, sodium hexametaphosphate, particulate hydroxyapatite and mixtures thereof.

The dentifrice will also usually contain a surfactant in an amount of from 0.2 to 5% by weight based on the total weight of the dentifrice. Suitable surfactants include anionic surfactants, such as the sodium, magnesium, ammonium or ethanolamine salts of C8 to C18 alkyl sulphates (for example sodium lauryl sulphate). Mixtures of any of the above described materials may also be used.

The term "remineralisation" in the context of the present invention means the in situ generation of hydroxyapatite on teeth.

A specific example of a suitable agent for the remineralisation of teeth is a mixture of a calcium source and a phosphate source which, when delivered to the teeth results in the in situ generation of hydroxyapatite on teeth.

Illustrative examples of the types of calcium source that may be used in this context (hereinafter termed "remineralising calcium sources") include, for example, calcium phosphate, calcium gluconate, calcium oxide, calcium lactate, calcium glycerophosphate, calcium carbonate, calcium hydroxide, calcium sulphate, calcium carboxymethyl cellulose, calcium alginate, calcium salts of citric acid, calcium silicate and mixtures thereof. Preferably the remineralising calcium source is calcium silicate.

The amount of remineralising calcium source(s) (e.g. calcium silicate) typically ranges from 1 to 30%, preferably from 5 to 20% by total weight remineralising calcium source based on the total weight of the oral care composition.

Illustrative examples of the types of phosphate source that may be used in this context (hereinafter termed "remineralising phosphate sources") include, for example, sodium dihydrogen phosphate, disodium hydrogen phosphate, sodium pyrophosphate, tetrasodium pyrophosphate, sodium tripolyphosphate, sodium hexametaphosphate, potassium dihydrogenphosphate, trisodium phosphate, tripotassium phosphate and mixtures thereof. Preferably the remineralising phosphate source is a mixture of trisodium phosphate and sodium dihydrogen phosphate.

The amount of remineralising phosphate source(s) (e.g. trisodium phosphate and sodium dihydrogen phosphate) typically ranges from 2 to 15%, preferably from 4 to 10% by total weight remineralising phosphate source based on the total weight of the oral care composition.

Mixtures of any of the above described materials may also be used.

Oral care compositions for use in the oral care system and method of the invention may also contain further optional ingredients customary in the art such as anticaries agents, anticalculus agents, buffers, flavouring agents, sweetening agents, colouring agents, opacifying agents, preservatives, antisensitivity agents, antimicrobial agents and the like.

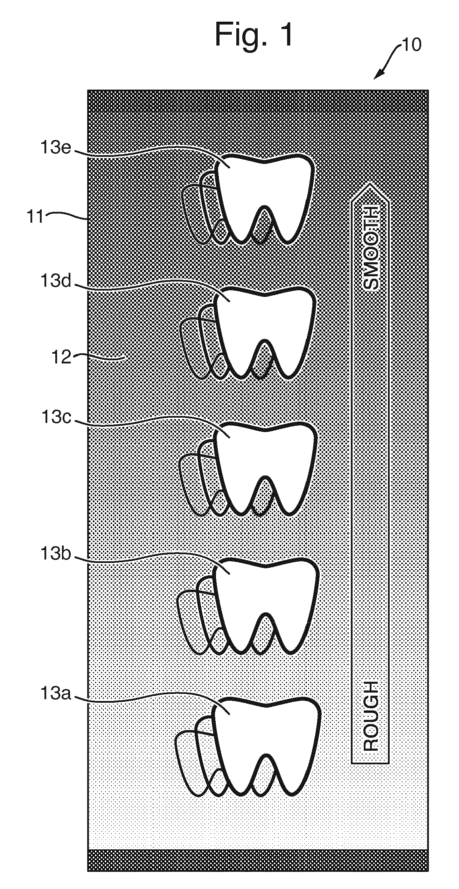

A specific example of an assessment device suitable for use in the invention is shown in the accompanying Figure 1 which represents a photographic plan view of the upper surface of the assessment device.

Referring to Figure 1, an assessment device (10) is provided in the form of an elongated strip (11) having a smooth upper surface (12) provided with a series of patches (13a), (13b), (13c), (13d), (13e). Each individual patch is provided with a uniformly textured surface having a particular roughness to the touch. The series of patches forms a graduated scale corresponding to a spectrum of surface roughness. Patch surface roughness decreases progressively from rough (13a) though to smooth (13e). The user's finger is rubbed over the patches until the user concludes which patch equates best with the roughness of the tooth surface being assessed.

## Claims

1. An oral care system which includes:
(i) an oral care composition effective to impart
improved surface properties to teeth; and
(ii) an assessment device packaged with the
composition, the device including a graduated scale (10)
corresponding to a spectrum of surface roughness, in which
regions of the scale may be compared with the tooth surface
of the user to demonstrate a progressive improvement in
tooth surface properties imparted by the composition.

2. A system according to claim 1, in which the assessment device comprises a generally flat planar substrate having a smooth upper surface, and in which the graduated scale takes the form of an array of discrete patches provided on the upper surface of the substrate, each patch having a particular surface roughness which changes progressively as the array is traversed.

3. A system according to claim 1 or 2, in which the oral care composition is a non-aqueous dentifrice with a liquid continuous phase comprising a thickening agent, a humectant, and one or more agents for the remineralisation of teeth.

## Patentansprüche

1. Mundpflegesystem, das enthält:
(i) eine Mundpflegemischung, die wirksam ist, den Zähnen verbesserte Oberflächeneigenschafen zu verleihen; und
(ii) eine Bewertungsvorrichtung, die mit der Mischung verpackt ist, wobei die Vorrichtung eine unterteilte Skala (10) enthält, die einem Spektrum der Oberflächenrauigkeit entspricht, wobei Bereiche der Skala mit der Zahnoberfläche des Anwenders verglichen werden können, um eine progressive Verbesserung der Zahnoberflächeneigenschaften, die durch die Mischung verliehen werden, zu demonstrieren.

2. System nach Anspruch 1, wobei die Bewertungsvorrichtung ein im Allgemeinen flaches ebenes Substrat mit einer glatten oberen Fläche umfasst und wobei die unterteilte Skala die Form einer Anordnung von diskreten Flecken annimmt, die auf der oberen Fläche des Substrats vorgesehen sind, wobei jeder Fleck eine bestimmte Oberflächenrauigkeit besitzt, die sich progressiv ändert, wenn die Anordnung durchquert wird.

3. System nach Anspruch 1 oder 2, wobei die Mundpflegemischung eine nicht wässrige Zahnpasta mit einer flüssigen kontinuierlichen Phase ist, die ein Verdickungsmittel, ein Feuchthaltemittel und ein oder mehrere Wirkstoffe für die Remineralisierung der Zähne enthält.

## Revendications

1. Système de soin oral qui comprend :
(i) une composition de soin oral efficace pour communiquer des propriétés de surface améliorées aux dents ; et
(ii) un dispositif de détermination emballé avec la composition, le dispositif comprenant une échelle graduée (10) correspondant à un spectre de rugosité de surface, dans lequel des régions de l'échelle peuvent être comparées avec la surface de dent de l'utilisateur pour démontrer une amélioration progressive des propriétés de surface de la dent communiquée par la composition.

2. Système selon la revendication 1, dans lequel le dispositif de détermination comprend un substrat planaire généralement plat présentant une surface supérieure lisse, et dans lequel l'échelle graduée prend la forme d'une rangée de pastilles discrètes fournie sur la surface supérieure du substrat, chaque pastille présentant une rugosité de surface particulière qui change progressivement lorsque la rangée est traversée.

3. Système selon la revendication 1 ou 2, dans lequel la composition de soin oral est un dentifrice non aqueux avec une phase continue liquide comprenant un agent épaississant, un humectant, et un ou plusieurs agents pour la reminéralisation des dents.
